Europäisches Patentamt

(19) European Patent Office

Office européen des brevets

(11) **EP 0 907 165 A1**

(12) **EUROPEAN PATENT APPLICATION**
published in accordance with Art. 158(3) EPC

(43) Date of publication:
07.04.1999 Bulletin 1999/14

(21) Application number: 98904435.9

(22) Date of filing: 24.02.1998

(51) Int. Cl.$^6$: **G11B 7/26**

(86) International application number:
PCT/JP98/00749

(87) International publication number:
WO 98/37556 (27.08.1998 Gazette 1998/34)

(84) Designated Contracting States:
DE FR GB NL

(30) Priority: 24.02.1997 JP 39577/97

(71) Applicant:
SEIKO EPSON CORPORATION
Shinjuku-ku, Tokyo 163-0811 (JP)

(72) Inventor: HIRONO, Kimio
Nagano-ken 392-8502 (JP)

(74) Representative:
Sturt, Clifford Mark et al
Miller Sturt Kenyon
9 John Street
London WC1N 2ES (GB)

(54) **ORIGINAL BOARD FOR MANUFACTURING OPTICAL DISK STAMPERS, OPTICAL DISK STAMPER MANUFACTURING METHOD, AND OPTICAL DISK**

(57) In the manufacturing processes for an optical disc stamper, a glass master comprising a glass disc 401 with a light absorbing material 402 bonded over it is used to prevent fluctuation of characteristics of reproduced signals in radial direction and lowering of the production margin because of change of the aggregate amount of exposure in the radial direction due to multiple exposure of photoresist by the laser beam reflected back on the rear surface of the glass master during the laser exposure. This enables to obtain a stamper with reproduced signals of uniform quality in the radial direction and provides better yield rate.

## Description

Technical Field

The present invention relates to a master disc for manufacturing an optical disc stamper, method for manufacturing an optical disc stamper and optical disc.

Background Art

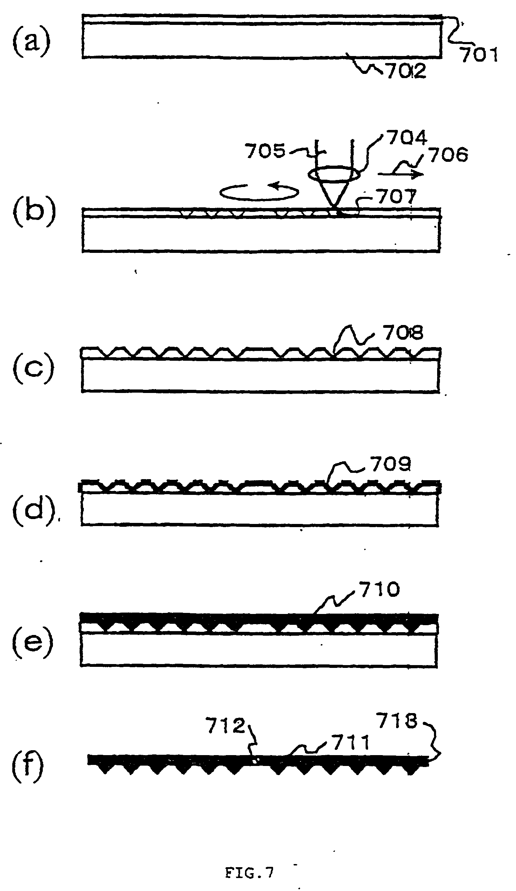

To describe prior art method for manufacturing an optical disc stamper, an example for manufacturing a write once compact disc is mentioned herein. This method generally consists of 6 processes, each of which is described with reference to FIGS.7(a) to (f). The drawings of FIGS.7(a) to (f) show the cross sections of the glass master in each process, respectively. Conventionally, the glass master for manufacturing an optical disc stamper is made of uniform glass with small optical scattering in a shape of a disc.

〈process 1:pretreatment FIG. 7 (a)〉

The surface of the glass master 702 is polished to make it flat and a photoresist layer 701 is formed by spin coating photoresist which may be heated by baking (heat treatment of the glass master), if necessary.

〈process 2:laser exposure FIG. 7(b)〉

The surface of the glass master 702 is rotated within a certain plane and an objective lens 704 is focused on the surface of the photoresist layer 701 to conduct exposure by moving the objective lens 704 and a laser beam 705 in the radial direction of the disc along the arrow 706. Latent images 707 of grooves are formed in a part of photoresist layer 701 exposed by the laser beam 705.

In a conventional write once compact disc the rotation of the glass master is controlled so as to maintain a constant linear velocity in the exposed part and the exposure is conducted under a constant amount of exposure.

〈process 3:development FIG. 7 (c)〉

The photoresist in the part of the latent images 707 is dissolved with developing liquid to form grooves 708.

〈process 4:metallizing FIG. 7 (d)〉

A conductive layer 709 is formed by such treatments as sputtering, galvanization or evaporation of metal over the photoresist surface.

〈process 5:electroforming FIG. 7 (e)〉

A metal layer 710 is developed to a specified thickness over the conductive layer 709 by electroforming process.

〈process 6:finishing FIG. 7 (f)〉

The metal surface is polished so as to bring stamper thickness to a desired value and the metal layer is peeled off. A stamper 711 is completed by fabricating a center hole 712 and a periphery 713.

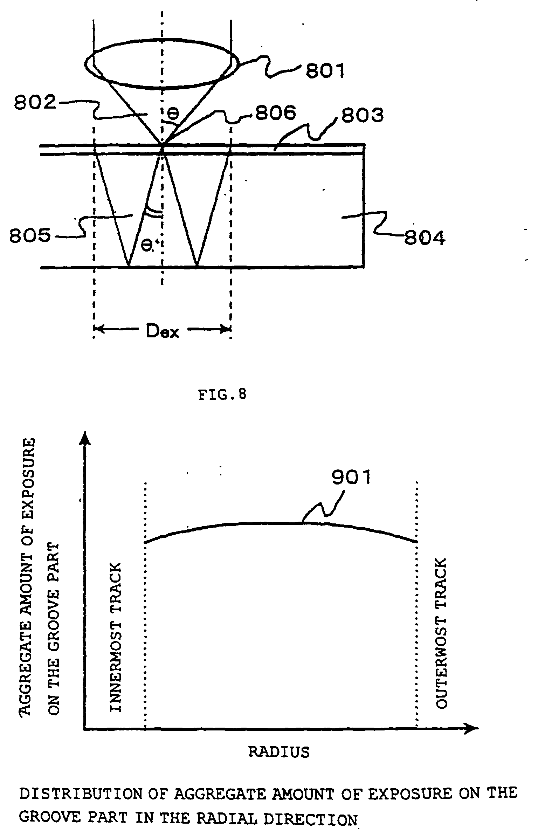

In the prior art manufacturing method, depth and/or width of grooves on the stamper tend to greatly fluctuate in the radial direction of a stamper due to reasons given in the following description with reference to FIGS.8,9 and 10.

Consider a moment in which a photoresist layer 803 coated over a glass master 804 is under exposure. A laser beam 802 focused by an objective lens 801 at a point 806 on the photoresist layer 803 passes through the photoresist layer into the glass master 804. It then passes through it diffusing therein and is reflected back on the rear surface of the glass master 804 at a certain reflectivity. The reflected laser beam 805 diffuses in a same manner and photoresist layer 803 is exposed again. In this example, if NA of the objective lens is 0.9, refractive index of the glass master 1.51 and thickness of the glass master 6.0 mm, then, an area being exposed by the laser beam 805 on the photoresist layer 803 takes a circular shape with a diameter $D_{ex}$ of some 17.8 mm which is obtained by a calculation. Accordingly, the point 806 exposed by the laser beam 802 under such conditions would affect such points as are 8.9 mm away from the points 806 on the photoresist layer 803.

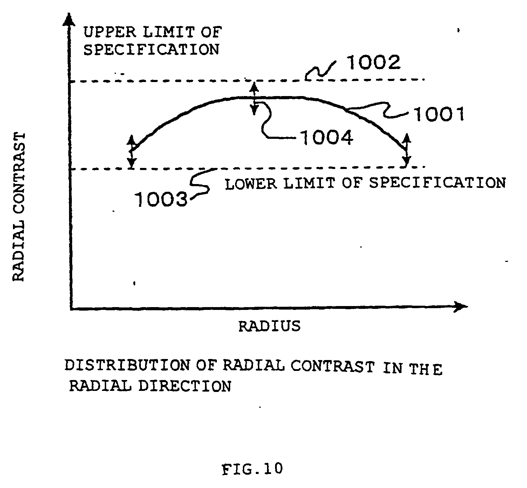

In this instance the amount of exposure by laser beam 805 is far smaller than that by the laser beam 802 in terms of ratio of energy density. However, in forming grooves over certain range on the glass master, the exposure by the laser bean 805 on any given point in a groove part on the photoresist layer 803 is multiple exposure as it is conducted by moving the objective lens 801 under rotation of the glass master 804 causing a fairly many times of exposure being repeated intermittently, while the exposure by the laser beam 802 thereon is conducted only once. Accordingly there is a likelihood of an aggregate amount of exposure by multiple exposure of laser bean 805 to reach in the order of several percent of the amount of exposure by the laser beam 802 at any given point in a groove on the photoresist layer 803. As number of intermittent exposures increases in an area around the intermediate area as compared with the innermost area or the outermost area, the aggregate amount of exposure on the groove part changes along the radial direction of the stamper to show a distribution curve 901 illustrated in FIG. 9. The change along the radial direction of the aggregate amount of exposure affects in large measure shape of grooves, causing depth or width of grooves to be enlarged in an area with a larger aggregate amount of exposure.

The above conditions affect radial contrast(RC), one of items in the manufacturing specifications for a write once compact disc stamper. The radial contrast is a parameter which reflect the dimensions of width and/or depth of a groove. The typical distribution of stamper radial contrast becomes as shown in FIG. 10, if it is manufactured under the prior art method with the aggregate exposure distribution as shown in FIG. 9. The middle portion of recording area on a stamper has larger radial contrast than the portions adjacent to the innermost or the outermost tracks.

In manufacturing a stamper the radial contrast is usually set between upper limit of 1002 and the lower limit of 1003 in the specifications. The distribution curve 1001 moves up and down due to various factors in manufacturing facilities, so that margin for the distribution curve variation becomes narrower for a curve with variations in the radial direction as shown in FIG. 10 than those without such variation. In detail a stamper without variation in the radial direction has allowable manufacturing margin from an upper limit 1002 to a lower limit 1003, while a stamper with the characteristic of the distribution curve 1001 has a margin with a narrower range as shown by arrows 1004, thus clearly it will result in lower yield rate.

In this instance the write once compact disc is described as an example but this issue is commonly shared not only by a stamper for the write once compact disc but also by all types of stamper. Further, the fluctuations in groove configuration in the radial direction affect not only to radial contrast but also all other items in manufacturing specifications.

Also, it is desirable not to expose land portions between grooves but they are exposed by laser beam 805. Usually exposed portions of the photoresist layer have disturbed surface causing higher noise in reproduced signals.

The object of the present invention is to suppress laser beam reflection on the rear surface of the glass master to improve yield rate in stamper production.

Disclosure of Invention

(1) The master disc for manufacturing an optical disc stamper of the present invention is characterized by having a antireflection layer applied to a transparent disc.
(2) The master disc for manufacturing an optical disc stamper of the present invention is characterized by having light absorbing material applied to a transparent disc.

(3) The master disc for manufacturing an optical disc stamper of the present invention is characterized by being made of glass containing light absorbing coloring agent.
(4) The master disc for manufacturing an optical disc stamper of the present invention is characterized by being made of plastic containing light absorbing coloring agent.
(5) The master disc for manufacturing an optical disc stamper of the present invention is a master disc for manufacturing an optical disc stamper in (2) wherein the light absorbing material is glass containing coloring agent.
(6) The master disc for manufacturing an optical disc stamper of the present invention is a master disc for manufacturing an optical disc stamper in (2) wherein the light absorbing material is plastic containing coloring agent.
(7) The master disc for manufacturing an optical disc stamper of the present invention is a master disc for manufacturing an optical disc stamper in (1) wherein a protective layer is applied for protecting the antireflection layer.
(8) The master disc for manufacturing an optical disc stamper of the present invention is a master disc for manufacturing an optical disc stamper in (2) wherein a protective layer is applied for protecting light absorbing material.
(9) The master disc for manufacturing an optical disc stamper of the present invention is a master disc for manufacturing an optical disc stamper in (1) wherein the antireflection layer is a single layer with smaller refractive index than the transparent disc.
(10) The master disc for manufacturing an optical disc stamper of the present invention is a master disc for manufacturing an optical disc stamper in (1) wherein the antireflection layer consists of a plurality of layers which are formed by laminating a layer with smaller refractive index and one with larger refractive index than the transparent disc.
(11) The method for manufacturing an optical disc stamper of the present invention comprises the steps of:
[a] a preprocessing step of polishing a master disc and coating it with photoresist;
[b] a step of bonding a light absorbing material on the rear surface of the master disc;
[c] a step of exposing by laser to form groove like configuration;
[d] a step of peeling the light absorbing material off;
[e] a step of developing the photoresist;
[f] a step of introducing conductivity by applying a conductive layer over photoresist surface;
[g] a step of electroforming to form a metal layer; and
[h] steps of finishing by polishing to adjust thickness of the metal layer, peeling the metal layer off and fabricating a center hole and periphery.

(12) The optical disc stamper of the present invention is characterized by being manufactured using any one of the master disc for manufacturing an optical disc stamper disclosed in (1) to (10).

(13) The optical disc stamper of the present invention is characterized by being manufactured using the method disclosed in (11).

(14) The optical disc of the present invention is characterized by being manufactured using either one of the optical disc stamper disclosed in (12) or (13).

By manufacturing a stamper using the master disc for manufacturing an optical disc stamper of the present invention or by the method for manufacturing an optical disc stamper of the present invention, it is possible to keep aggregate amount of photoresist exposure constant in the radial direction by suppressing reflection on the rear surface of the glass master. Accordingly it is possible to keep the width and depth of formation on the stamper such as grooves which are formed in accordance with the aggregate amount of exposure constant in the radial direction, thus enabling to provide wider production margin and better yield rate. Also, it is possible to suppress surface disturbance in portions corresponding to lands on the stamper by reducing exposure of land portions resulting in lower noise level in reproduced signals.

Further, the optical disc manufactured by using the master disc for manufacturing an optical disc stamper or the method for manufacturing an optical disc stamper of the present invention has wider production margin and better yield rate, as it has uniform width and depth of grooves, etc. Also, the optical disc of the present invention has small fluctuations in reproduced signals.

Brief Description of Drawings

FIG. 1 is a sectional view of the glass master for manufacturing an optical disc stamper for illustrating the embodiment 1.
FIG. 2 is a sectional view of the glass master for manufacturing an optical disc stamper for illustrating the embodiment 2.
FIG. 3 is a sectional view of the glass master for manufacturing an optical disc stamper for illustrating the embodiment 3.
FIG. 4 is a sectional view of the glass master for manufacturing an optical disc stamper for illustrating the embodiment 4.
FIG. 5 is a sectional view of the glass master for manufacturing an optical disc stamper for illustrating the embodiment 5.
FIGS.6(a) to (h) are schematic views illustrating each process to describe the method for manufacturing an optical disc stamper for description of embodiment 6.
FIGS.7(a) to (f) are schematic views illustrating each process to describe the prior art method for manufacturing an optical disc stamper.
FIG. 8 is a schematic view illustrating the state of the laser beam in an instant during the exposure process in the prior art method for manufacturing an optical disc stamper.
FIG. 9 is a graph illustrating the distribution of aggregate amount of exposure of groove portion in the radial direction.
FIG. 10 is a graph illustrating the distribution of radial contrast in the radial direction.
FIGS.11(a) to (c) are schematic views illustrating manufacturing processes of an optical disc using a stamper of the present invention.

Reference numerals

101,201,401,501 glass disc
301,602,702,804 glass master
102,202,203 antireflection layer
103,205,302,404,503 surface
104,105,204,303,403,405,505 rear surface
402,502,603 light absorbing material
504 protective layer
601,701,803 photoresist layer
602,702,804 glass master
605,704,801 objective lens
606,805,802,705 beam
607,706,1004 arrow
608,707 latent image of groove
609, 708 groove
610,709 conductive layer
611,710 metal layer
612,711 stamper
613,712 center hole
614,713 periphery
901,1001 distribution curve
1002 upper limit of specification
1003 lower limit of specification
806 point
1101 optical disc stamper
1102 substrate
1103 layer
1104 protective layer

Best Mode for Carrying Out the Invention

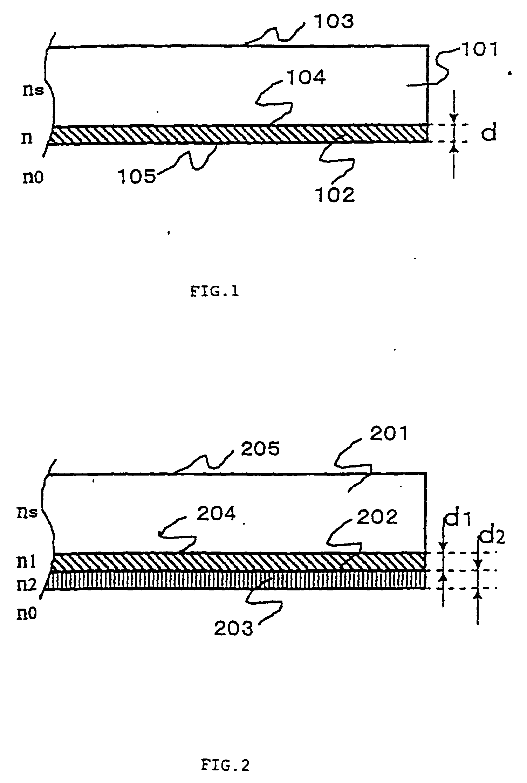

By way of an example operation of laser exposure using the master disc for manufacturing an optical disc stamper with a single layer in claim 9 is described hereunder with reference to FIG. 1.

A glass disc 101 is made of transparent glass of uniform quality with a refractive index $n_s$ which is

greater than that of the air $n_0$ and a antireflection layer 102 is formed on the rear surface thereof by evaporating material with a refractive index n which is smaller than $n_s$ and greater than $n_0$. To produce a stamper a photoresist layer is formed on the surface 103 of the glass disc 101 by coating photoresist and then exposure is conducted.

In this process the laser beam passed through the photoresist layer further passes through the glass disc 101, a part of which is reflected on the rear surface 104 of the glass disc 101. The phase of the reflected light does not change as $n_s > n$. On the other hand the laser beam passed through the rear surface 104 is reflected on the rear surface 105 of the antireflection layer 102. The phase of the latter of the reflected lights does not change too, as $n > n_0$. In this instance the laser beam reflected on the rear surface 104 and that reflected on the rear surface 105 will interfere with each other and offset each other, if the refractive index n of the antireflection layer 102 and the thickness d thereof is properly selected so as to make both of them carry the same amount of light with phase difference of $\pi$ within the glass disc 101.

The condition of n for attaining ideal value of reflectivity 0 is

$$n = \sqrt{n_0 n_s} \qquad \text{(equation 1)}$$

The thickness d is

$$d = \lambda(N + 1)/4n \qquad \text{(equation 2)}$$

where $\lambda$ is the wavelength of laser for exposure and N is a positive integer. Suppressing reflection on the rear surface 104 of the glass disc 101 will thus prevent exposing the photoresist layer again.

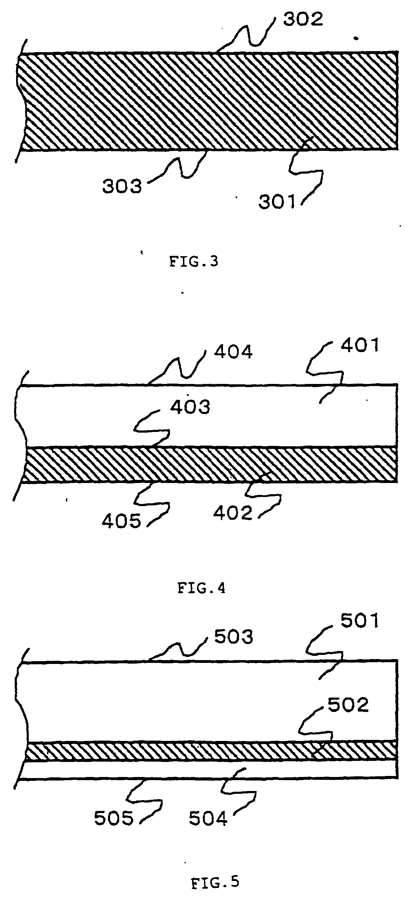

Next, operation of the glass master for manufacturing an optical disc stamper in claim 2 will be illustrated by referring to FIG. 4.

A glass disc 401 is made of material with uniform quality and light absorbing material 402 is bonded with adhesive on the rear surface thereof. The light absorbing material 402 contains coloring agent for absorbing light with wavelength from laser light source for exposure. The refractive index of the glass disc 401, adhesive and light absorbing material 402 is set at substantially the same value, so as to prevent reflection at respective boundaries.

In manufacturing a stamper, photoresist is coated over the surface 404 of the glass disc 401 to form a photoresist layer and to conduct exposure. The laser beam passed through the photoresist layer passes through the rear surface of the glass disc 401 and adhesive to impinge onto the light absorbing material 402. The laser bean passes through the light absorbing material 402 in declining intensity due to the effect of the light absorbing material 402 and is reflected on the rear surface thereof to pass, with further declining intensity, through the light absorbing material 402 again to impinge onto the glass disc 401. Then, it reaches the photoresist layer but it is possible to reduce exposure of the photoresist layer as almost all of the exposing light is absorbed by the light absorbing material.

(Embodiment 1)

An embodiment of a master disc for manufacturing an optical disc stamper in claim 1 of the present invention is illustrated with reference to FIG. 1.

A glass disc 101 is a circular disc made of material with uniform quality which is the equivalent of those glass master used in the prior art. A antireflection layer 102 is evaporated over the rear surface 104 of the glass disc 101. The refractive index n and thickness d of the antireflection layer 102 is set so as to minimize reflectivity at the rear surface 104 of the glass disc.

The laser beam impinging onto the rear surface of the glass disc 101 is diffused light with a certain diffusing angle but supposing its reflectivity is substantially equal to that of the laser beam impinging perpendicularly onto the rear surface and supposing $n_s = 1.51$, $\lambda = 442$ nm, and N=0, then the refractive index n is 1.23 and thickness d 90 nm according to the above mentioned equations 1 and 2. However, in practice, magnesium fluoride or rock crystal( with refractive indexes of 1.38 and 1.35, respectively) is usually used for material of the antireflection layer 102 as there is not many material available which exactly meets the requirement of refractive index.

In this embodiment a glass disc 101 is used but not only glass but also plastic disc may be used in the present invention. Material for the antireflection layer 102 in such a case should have a refractive index substantially equal to the value of n which is derived from the equation 1.

In manufacturing a stamper using a glass master of the present invention, photoresist is coated over the surface 103 of the glass disc 101 and exposure of the photoresist layer is conducted. Other processes are the same as those described in the prior art. Using this glass master will enable to produce a stamper which has constant aggregate amount of exposure in the radial direction by suppressing reflection on the rear surface of the glass master, providing wider production margin and better yield rate.

(Embodiment 2)

An embodiment of a master disc for manufacturing an optical disc stamper in claim 10 of the present invention is illustrated with reference to FIG. 2.

A glass disc 201 is a circular disc made of material with uniform quality which is an equivalent of those glass masters used in the prior art. A antireflection layer 202 with a refractive index $n_1$ and a antireflection layer 203 with a refractive index $n_2$ are evaporated

over the rear surface of the glass disc 201 in lamination. The refractive indexes $n_1$, $n_2$ and thickness $d_1$, $d_2$ of the antireflection layers 202 and 203, respectively, are set so as to minimize reflectivity on the rear surface 204 of the glass disc.

The laser beam impinging onto the rear surface of the glass disc 201 is scattered light with a certain scattering angle but supposing that its reflectivity is not so much different from that of the laser beam impinging perpendicularly onto the rear surface, the condition to attain 0 in reflectivity is

$$(n_2/n_1)2 = n_s/n_0 \qquad \text{(Equation 3)}$$

Thickness $d_1$ and $d_2$ are

$$d_1 = \lambda (N + 1)/4n_1 \qquad \text{(Equation 4)}$$

$$d_2 = \lambda (N + 1)/4n_2 \qquad \text{(Equation 5)}$$

where $\lambda$ is wavelength of exposing laser and N a positive integer Supposing ns = 1.51, $\lambda$= 442 nm, N=0 with a antireflection layer 202 of magnesium fluoride ( refractive index $n_1$= 1.38), refractive index $n_2$ of the antireflection layer 203 is 1.70 from the equation 3. Thickness $d_2$ is 65 nm from the equation 5. However, in practice, cerium fluoride ( refractive index $n_2$= 1.60) is used as there is not many material available which meets the requirement of refractive index exactly. Thus, a double layered antireflection layer will enable to obtain lower reflectivity than that of the single layered antireflection layer of the embodiment 1.

In this embodiment a glass disc 201 is used but not only glass but also plastic disc may be used. Materials for the antireflection layer 202 and 203 are not limited to magnesium fluoride and cerium fluoride. In this example described is a double layered antireflection layer but it may be possible to laminate a plurality of layers with high refractive index or low refractive index alternately one over the other using the above effect.

In manufacturing of a stamper using a glass master of the present invention, photoresist is coated over the surface 205 of the glass disc 201 and exposure of the photoresist layer is conducted. Other processes are the same as those described in the prior art. Using this glass master will enable to produce a stamper which has constant aggregate amount of exposure in the radial direction by suppressing reflection on the rear surface of the glass master, providing wider production margin and better yield rate.

(Embodiment 3)

An embodiment of a glass master for manufacturing an optical disc stamper in claim 3 of the present invention is illustrated with reference to FIG. 3.
A glass master 302 is made of uniform material with small scattering containing coloring agent for absorbing light of wavelength of exposing laser light source. It may be deemed as a sort of an optical filter.

In manufacturing a stamper using a glass master of the present embodiment, photoresist is coated over the surface 302 of the glass master 301 and exposure of the photoresist layer is conducted. During exposure the beam impinged on the surface 302 passes through the glass master 301 with its intensity being attenuated by absorption due to the coloring agent and is reflected on the rear surface 303. The reflected beam further passes through the glass master 301 with its intensity being attenuated until it reaches the surface 302.

The amount of light $I_0$ which reaches the surface 302 due to reflection on the rear surface 303 depends on transmittance of the glass master 301 between the surface 302 and the rear surface 303. Actually, with the transmittance of 90 % and reflectivity of 4 % on the rear surface 303, $I_0$ is 0.04 % of the amount of exposure on the glass master 301 presenting almost no effect to the photoresist. The transmittance of the glass master 301 depends on type and density of coloring agent and thickness of the glass master 301 but those factors are to be determined in consideration of such conditions as acceptable transmittance for the glass master to be used or production processes.

In this embodiment glass is used for material of the glass master 301 but not only glass but also plastic may be used as material in the present invention.

The glass master 301 of the present invention is easy to produce as it can be prepared by adding coloring agent to a prior art transparent glass master. Using this glass master will enable to produce a stamper which has constant aggregate amount of exposure in the radial direction by suppressing reflection on the rear surface of the glass master, providing wider production allowance and better yield rate.

(Embodiment 4)

An embodiment of a glass master for manufacturing an optical disc stamper in claims 2 and/or 5 of the present invention is illustrated with reference to FIG. 4.
A glass disc 401 is a circular disc made of material with uniform quality which is the equivalent of those used in the prior art. A light absorbing material 402 is bonded over the rear surface 403 of the glass disc 401. The light absorbing material 402 is made of glass containing coloring agent for absorbing light of wavelength of exposing light source. In bonding of the light absorbing material 402, adhesive, etc. may be sandwiched between the glass disc 401 and the light absorbing material 402. However, it is desirable for refractive indexes of the glass disc 401, adhesive and the light absorbing material 402 to be not so different from each other to prevent reflection at the boundaries between those layers.

In manufacturing a stamper using a glass master of the present embodiment, photoresist is coated over the surface 404 of the glass disc 401 and exposure of the photoresist layer is conducted. The beam impinged on the surface 404 passes through the glass disc 401 with almost no attenuation in its intensity to reach the rear surface 403 and then impinges on the light absorbing material 402 passing through the adhesive layer. The beam passes through the light absorbing material 402 attenuating by absorption due to the coloring agent and is reflected on the rear surface 405. The reflected beam again passes attenuating through the light absorbing material 402 to reaches the rear surface 403. After passing again through the adhesive layer, it then passes through the glass disc 401 to reach the surface 404 and the photoresist layer.

The amount of light $I_0$ of the beam to reach the surface 404 due to reflection on the rear surface 405 depends on transmittance of the light absorbing material 402 between its surface and the rear surface 405. Actually, with the transmittance of 90 % and reflectivity of 4 % on the rear surface 405, $I_0$ is 0.04 % of the amount of exposure on the glass disc 401 presenting almost no effect to the photoresist. The transmittance of the light absorbing material 402 depends on type and density of coloring agent used and thickness of the light absorbing material 402 but those factors are to be determined in consideration of such conditions as acceptable transmittance for the glass master to be used or production processes.

In this embodiment glass is used for material of the glass disc 401 and the light absorbing material 402 but not only glass hut also plastic may be used in the present invention. By preparing a stamper using the glass master of the present invention it is possible to produce a stamper which has constant aggregate amount of exposure in the radial direction by suppressing amount of light to be reflected on the rear surface of the glass master and thus provides wider production margin and better yield rate.

(Embodiment 5)

An embodiment of a glass master for manufacturing an optical disc stamper in claim 8 of the present invention is illustrated with reference to FIG. 5.

A glass disc 501 is a circular disc made of material with uniform quality which is the equivalent of those used in the prior art. A light absorbing material 502 is applied over the rear surface of the glass disc 501. The light absorbing material 502 may be made by evaporating chromium or by spin coating and curing of resin containing coloring agent. A protective layer 504 is further laminated over the light absorbing material 502. The material of the protective layer may be glass or plastic.

In manufacturing a stamper using a glass master of the present embodiment, photoresist is coated over the surface 503 of the glass disc 501 and exposure of the photoresist layer is conducted. The beam impinged on the surface 503 passes through the glass disc 501 with almost no attenuation to reach the light absorbing material 502 where the beam is absorbed by the action of the light absorbing material 502 and a part of the beam reaches the protective layer 504 and is reflected back on the rear surface 505. The reflected beam is again absorbed by the light absorbing material 502 and then passes through the glass disc 501 to reach the surface 503 and the photoresist.

In an actual example the amount of light $I_0$ of the beam reaching the surface 504 due to reflection on the rear surface 505 depends on transmittance of the light absorbing material 502. Actually, with transmittance of 90 % and reflectivity of 4 % on the rear surface 505, $I_0$ is 0.04 % of the amount of exposure onto the glass disc 501 presenting almost no effect to the photoresist.

In this embodiment glass is used for material of the glass disc 501 but not only glass but also plastic may be used in the present invention.

By preparing a stamper using the glass master of the present invention it is possible not to inflict any damages on the light absorbing material 502 during polishing process in production processes, thus allowing repeated use. It is possible to produce a stamper which has constant aggregate amount of exposure in the radial direction by suppressing amount of light reflected on the rear surface of the glass master and thus provides wider production margin and better yield rate.

(Embodiment 6)

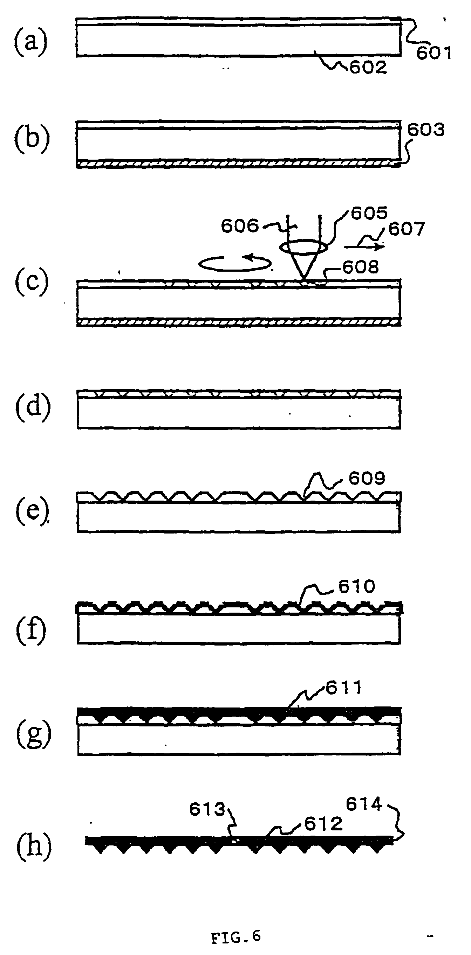

An embodiment of a master disc for manufacturing an optical disc stamper in claim 11 of the present invention is illustrated with reference to FIGS.6(a) to (h).

〈process 1:pretreatment FIG. 6 (a)〉

The surface of the glass master 602 is polished to make it flat and a photoresist layer 601 is formed by spin coating photoresist in liquid state which is cured by baking.

〈process 2:bonding of light absorbing material FIG. 6 (b)〉

Light absorbing material 603 is bonded over the rear surface of the glass master 602.

The light absorbing material 603 is a film made of plastic containing coloring agent for absorbing light of wavelength of exposing light source. This may be thought as a color filter. Bonding the light absorbing material 603 may be conducted by sandwiching adhesive or liquid between the glass master 602 and the light absorbing material 603. However, it is desirable for the glass master 602, the adhesive and the light absorbing material 603 to have refractive indexes not so different each other to prevent reflection at the boundaries between those layers.

In this process care should be taken in bonding so as not to allow an air layer to form between the rear surface of the glass master 602 and the light absorbing material 603 to suppress reflection.

〈process 3:laser exposure FIG. 6 (c)〉

The surface of the glass master 602 is rotated within a certain plane and an objective lens 605 is focused on the surface of the photoresist layer 601 to conduct exposure by moving an objective lens 605 and a laser beam 606 in the radial direction of the disc. Latent images 608 of grooves are formed in the exposed portion.

〈process 4:peeling off of light absorbing material FIG. 6 (d)〉

The light absorbing material 603 is peeled off the glass master 602.

〈process 5:development FIG. 6 (e)〉

The photoresist in the part of the latent images 608 is dissolved with developing fluid to form grooves 609.

〈process 6:introducing conductivity FIG. 6 (f)〉

A conductive layer 610 is formed by such processes as sputtering, galvanization or evaporation of metal over the photoresist surface.

〈process 7:electroforming FIG. 6 (g)〉

A metal layer 611 is developed up to a specified thickness over the conductive layer 610 by electroforming process.

〈process 8:finishing FIG. 6 (h)〉

The metal surface is polished so as to give the stamper a desired thickness and then the metal layer 611 is peeled off. A stamper 612 is completed by opening a center hole 613 and forming the periphery 614 in a circular shape.

In the above processes it is suffice for the bonding of the light absorbing material in the process 2 and the peeling off of the light absorbing material in the process 4 to be conducted before and after the process 3, respectively, so that the those processes does not necessarily take place in the order above stated.

In the manufacturing processes of this embodiment the tight absorbing material is bonded over the glass master only during the laser exposure process, so that it is not inflicted any damage during any other processes. There is further advantage in that an already existing manufacturing facility can be utilized as it is.

(Embodiment 7)

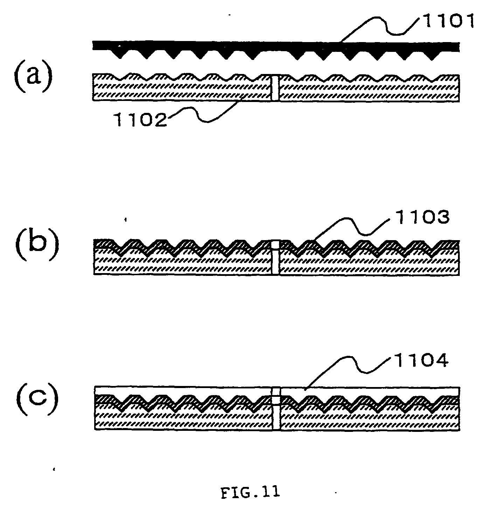

An embodiment of the manufacturing processes of an optical disc in claim 14 of the present invention is illustrated with reference to FIGS.11(a) to (c).

The optical disc stamper 1101 is a optical disc stamper manufactured using any one of the glass master for manufacturing an optical disc stamper of embodiments 1 to 5 of the present invention or using the method for manufacturing an optical disc stamper of embodiment 6 of the present invention.

The optical disc stamper 1101 is mounted on a mold of an injection molding machine for molding by injection with resin such as polycarbonate to transfer configuration on the recording surface of the stamper to produce a disc shaped optical disc substrate 1102.

Next, a layer 1103 is applied over the surface formed with grooves by means of a sputtering machine. The layer consists of a recording layer, or a medium for recording and reproducing information by means of light and a reflective layer for enhancing reflectivity.

Next, to protect the layer from erosion or deterioration, a protective layer is applied by means of spin coating and then cured to complete an optical disc. After that, in some cases, according to types of optical disc, a hub required to mount it in an optical disc drive is installed at the center of the optical disc or it is inserted in a cartridge for protecting a whole optical disc.

As configuration and depth of grooves on the optical disc stamper 1101 is uniform in the radial direction, an optical disc manufactured using the stamper also has uniform grooves in the radial direction. Accordingly, it is possible to keep uniformity of reproduced signals in the radial direction and to obtain wider production margin and better performance of the optical disc.

## Claims

1. A master disc for manufacturing an optical disc stamper characterized by having a antireflection layer applied to a transparent disc.

2. A master disc for manufacturing an optical disc stamper characterized by having light absorbing material applied to a transparent disc.

3. A master disc for manufacturing an optical disc stamper characterized by being made of glass containing light absorbing coloring agent.

4. A master disc for manufacturing an optical disc stamper characterized by being made of plastic containing light absorbing coloring agent.

**5.** A master disc for manufacturing an optical disc stamper in claim 2 wherein the light absorbing material is glass containing coloring agent.

**6.** A master disc for manufacturing an optical disc stamper in claim 2 wherein the light absorbing material is plastic containing coloring agent.

**7.** A master disc for manufacturing an optical disc stamper in claim 1 wherein a protective layer is applied for protecting the antireflection layer.

**8.** A master disc for manufacturing an optical disc stamper in claim 2 wherein a protective layer is applied for protecting light absorbing material.

**9.** A master disc for manufacturing an optical disc stamper in claim 1 wherein the antireflection layer is a single layer with smaller refractive index than the transparent disc.

**10.** A master disc for manufacturing an optical disc stamper in claim 1 wherein the antireflection layer consists of a plurality of layers which are formed by laminating a layer with smaller refractive index and one with larger refractive index than the transparent disc.

**11.** A method for manufacturing an optical disc stamper comprising the steps of:

[a] a preprocessing step of polishing a master disc and coating it with photoresist;
[b] a step of applying light absorbing material on the rear surface of the master disc;
[c] a step of exposing by laser to form groove like configuration;
[d] a step of peeling the light absorbing material off;
[e] a step of developing the photoresist;
[f] a step of introducing conductivity by applying a conductive layer over photoresist surface;
[g] a step of electroforming to form a metal layer; and
[h] steps of finishing by polishing to adjust thickness of the metal layer, peeling the metal layer off and fabricating a center hole and periphery.

**12.** An optical disc stamper characterized by being manufactured using any one of the master disc in claims 1 to 10.

**13.** An optical disc stamper characterized by being manufactured using the manufacturing method in claim 11.

**14.** An optical disc characterized by being manufactured using either one of the optical disc stamper in claims 12 or 13.

FIG.1

FIG.2

302

303

301

FIG.3

404          401

403

405          402

FIG.4

503          501

502

505     504

FIG.5

FIG.6

FIG.7

FIG.8

DISTRIBUTION OF AGGREGATE AMOUNT OF EXPOSURE ON THE
GROOVE PART IN THE RADIAL DIRECTION

DISTRIBUTION OF RADIAL CONTRAST IN THE
RADIAL DIRECTION

FIG.10

FIG.11

## INTERNATIONAL SEARCH REPORT

| International application No. |
|---|
| PCT/JP98/00749 |

**A. CLASSIFICATION OF SUBJECT MATTER**
Int.Cl⁶ G11B7/26, 501

According to International Patent Classification (IPC) or to both national classification and IPC

**B. FIELDS SEARCHED**

Minimum documentation searched (classification system followed by classification symbols)
Int.Cl⁶ G11B7/26-G11B7/26, 511

Documentation searched other than minimum documentation to the extent that such documents are included in the fields searched
Jitsuyo Shinan Koho          1926-1998   Toroku Jitsuyo Shinan Koho   1994-1998
Kokai Jitsuyo Shinan Koho   1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 4-263140, A (Ricoh Co., Ltd.), September 18, 1992 (18. 09. 92) (Family: none) | 1-2, 9-14 |
| X | JP, 7-147026, A (NEC Corp.), June 6, 1995 (06. 06. 95) (Family: none) | 1-2, 12-14 |
| X | JP, 6-318342, A (OD & ME B.V.), November 15, 1994 (15. 11. 94) & EP, 608929, A1 & NL, 9300126, A & CN, 1096979, A | 2-4, 12-14 |
| Y | JP, 4-263140, A (Ricoh Co., Ltd.), September 18, 1992 (18. 09. 92) (Family: none) | 5-6 |
| Y | JP, 7-147026, A (NEC Corp.), June 6, 1995 (06. 06. 95) (Family: none) | 5-6 |
| Y | JP, 6-318342, A (OD & ME B.V.), November 15, 1994 (15. 11. 94) & EP, 608929, A1 & NL, 9300126, A & CN, 1096979, A | 5-6 |

[x] Further documents are listed in the continuation of Box C.   [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| March 26, 1998 (26. 03. 98) | April 7, 1998 (07. 04. 98) |

| Name and mailing address of the ISA/ Japanese Patent Office | Authorized officer |
|---|---|
| Facsimile No. | Telephone No. |

Form PCT/ISA/210 (second sheet) (July 1992)

INTERNATIONAL SEARCH REPORT

International application No.

PCT/JP98/00749

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 4-263140, A (Ricoh Co., Ltd.), September 18, 1992 (18. 09. 92) (Family: none) | 7-8 |
| A | JP, 7-147026, A (NEC Corp.), June 6, 1995 (06. 06. 95) (Family: none) | 7-8 |
| A | JP, 6-318342, A (OD & ME B.V.), November 15, 1994 (15. 11. 94) & EP, 608929, A1 & NL, 9300126, A & CN, 1096979, A | 7-8 |
| A | JP, 8-203131, A (Ricoh Co., Ltd.), August 9, 1996 (09. 08. 96) (Family: none) | 1-2, 5-14 |

Form PCT/ISA/210(continuation of second sheet)(July 1992)